(19) Europäisches Patentamt
European Patent Office
Office européen des brevets

(11) **EP 1 684 263 B1**

(12) **EUROPEAN PATENT SPECIFICATION**

| | |
|---|---|
| (45) Date of publication and mention of the grant of the patent: **05.05.2010 Bulletin 2010/18** | (51) Int Cl.: **G10L 11/00** (2006.01) |

(21) Application number: **05001258.2**

(22) Date of filing: **21.01.2005**

(54) **Method of generating a footprint for an audio signal**

Vervahren zum Erzeugen eines Abdrucks eines Audiosignals

Methode pour générer une empreinte d'un signal audio

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**26.07.2006 Bulletin 2006/30**

(73) Proprietor: **Unlimited Media GmbH**
**30900 Wedemark (DE)**

(72) Inventor: **Rhein, Hanspeter**
**30900 Wedemark (DE)**

(74) Representative: **Betten & Resch**
**Patentanwälte**
**Postfach 10 02 51**
**80076 München (DE)**

(56) References cited:
**US-A1- 2003 205 124    US-A1- 2004 158 437**

- **CANO P ET AL: "A review of algorithms for audio fingerprinting" PROCEEDINGS OF THE 2003 IEEE RADAR CONFERENCE. HUNTSVILLE, AL, MAY 5 - 8, 2003, IEEE RADAR CONFERENCE, NEW YORK, NY : IEEE, US, 9 December 2002 (2002-12-09), pages 169-173, XP010642539 ISBN: 0-7803-7920-9**
- **HERRE J ET AL: "Robust matching of audio signals using spectral flatness features" 2001 IEEE WORKSHOP ON THE APPLICATIONIS OF SIGNAL PROCESSING TO AUDIO AND ACOUSTICS, 21 October 2001 (2001-10-21), pages 127-130, XP010566891 PISCATAWAY, NJ, USA,IEEE ISBN: 0-7803-7126-7**
- **HAITSMA J ET AL: "Speed-change resistant audio fingerprinting using auto-correlation" 2003 IEEE INTERNATIONAL CONFERENCE ON ACOUSTICS, SPEECH, AND SIGNAL PROCESSING. PROCEEDINGS. (ICASSP), vol. VOL. 1 OF 6, 6 April 2003 (2003-04-06), pages IV-728-IV-731, XP010641263 HONG KONG ISBN: 0-7803-7663-3**

**Description**

The invention relates to a method of generating a footprint for an audio signal.

The term 'useful signal' as used herein is meant to designate signals which represent data intended eventually for reception by a user, in particular a human user. Common examples of useful signals are audio signals, representing the evolution of a spectrum of frequencies for acoustic waves over time (the spectrum ranging for example from 300 Hz to 3400 Hz for telephony or from 10 Hz to 20 kHz for high quality reproduction of a classical concert) or video signals (single as well as moving images), where a frequency of the useful signal is, for example for displaying on a TV or cinema screen, defined by the image properties and lies between 0 Hz (an empty image) and a maximum frequency determined by the rows and columns of the screen and a refresh rate for moving images, e.g. 6.5 MHz for many TV-systems.

Useful signals might however also include signals representing text strings or other representations and also future developments of such signals intended directly or indirectly in particular for human perception.

Useful signals might be represented in an analogous way, for example as radio or TV signals, or might be represented as digital signals, for example PCM-signals formed by sampling an analogous signal with subsequent quantizing and perhaps coding steps. In any case a useful signal is meant to include a complete representation of the relevant data set, be it a single piece of music or a set of such tracks, a single image or a complete movie.

There is a general need to compare useful signals with each other, for example for the purpose of distinguishing a particular signal from other signals, or for checking the identity of two useful signals.

The obvious way of checking the identity of two digital signals is bit-by-bit comparison. However, this procedure is not useful in many cases: Suppose a signal has been duplicated by a copy procedure, such that the signals are identical to each other. If the second signal is then modified, e.g., converted to the popular MP3 format for download purposes, after uncompression a comparison of both signals will result in both signals being different. The same holds for digital-to-analog- and analog-to-digital-conversions.

Cano et al described in proceedings of the IEEE, 9 December 2002, pages 169-173 a review of different algorithms for generating audio fingerprints including the steps of preprocessing, framing and overlapping, transformation, feature extraction, post processing and fingerprint modeling.

Typically, to allow for an automatic processing of useful signals, identification data have to be provided along with the signal. As an example, data fields for strings representing authorship, date of recording, type of music, etc. might be added to a music track. For the purpose of determining identical or similar signals, these additional data fields have to be processed. Still, it is difficult to identify similar signals, for example classic and rock music tracks with similar melody.

Data identifying a useful signal in one or more aspects are called a footprint hereinafter (sometimes such data are also called fingerprint). In particular, footprint data might identify a signal with respect to human perception during reception of the signal by a human user.

It is an object of the invention to provide a method of generating a footprint for an audio signal, which allows automatic detection of identical or similar audio signals in a cost-efficient way, where the footprint is robust against modifications of the audio signal not perceptible to human users, and which allows an efficient detection of identical or similar footprints, and to provide respective devices.

This object is solved by a method with the features of claim 1 and a device with the features of claim 16.

According to the invention, at least one data set comprising a part of a useful signal is processed by an analyzer according to a predetermined analyzing instruction, where the analyzer outputs as a result of the processing a footprint data vector depending on and identifying the processed data set.

One of the fundamental ideas of the invention is to generate a footprint as a result of processing the useful signal or a part of it by a useful signal analyzing instruction. Thus, the footprint comprises a footprint data vector represents properties of the useful signal itself. It is not required that a human administrator manually adds descriptional data to the useful signal. As the footprint is related to the properties of the useful signal, identical and similar useful signals can be identified by an appropriate comparison of the respective footprints.

In detail, according to the invention, a method of generating a footprint for a useful signal, in particular an audio signal, wherein the useful signal represents the evolution of a spectrum comprising useful signal frequencies, for example audio frequencies, over time, comprises that at least one data set comprising a part of the useful signal is processed by an analyzer according to a predetermined analyzing instruction, where the analyzer outputs as a result of the processing a footprint data vector depending on and identifying the processed data set.

In preferred embodiments of the inventive method, the analyzing instruction processes the data set with regard to properties of the data set, which are perceptible for human sense during reception of the useful signal by humans. Thus, an identification of useful signals, which appear similar to human perception, is advantageously possible.

In further preferred embodiments of the inventive method, the data set is processed by two or more analyzers and/or two or more analyzing instructions and the footprint data vector represents results of the processing by the analyzers and/or analyzing instructions. Thus, two or more properties of the useful signals might be represented within the footprint, e.g. melody and rhythm.

In other embodiments of the invention, two or more overlapping or non-overlapping data sets of the useful signal are processed and the footprint data vector represents results of the processing of the data sets. Thus, the possibilities of representing signal properties in footprint data vector are greatly enhanced.

In further embodiments of the inventive method, the data set comprises a useful signal frame of the useful signal, the analyzing instruction comprises comparing the data set with each pattern frame of a predetermined pattern dictionary, where the pattern dictionary comprises a numbered list of pattern frames, and comprises estimating a similarity of the useful signal frame with each of the pattern frames, and the analyzer outputs as the result of the processing of the data set the number of the pattern frame which is determined to have highest similarity with the useful signal frame. Advantageously, it is possible to map patterns occurring in the useful signal, which, e.g., might be typical for the particular kind of signal, to known patterns and to replace the pattern by the pattern number. Thus it is possible to characterize with a small data set (a set of pattern numbers) the much larger data set of the useful signal.

In a further developed embodiment, the useful signal frame is assigned a useful signal frame vector, each of the pattern frames is assigned a pattern frame vector, and the similarity of each pair of useful signal frame and pattern frame is determined by calculating the distance between the useful signal frame vector and the respective pattern frame vector. Thus, efficient algorithms known from vector analysis can be advantageously deployed.

In a still further developed embodiment, the analyzer is a spectral analyzer, which calculates smoothed spectrum parameters, in particular cepstral coefficients, for the frame using a linear prediction algorithm. Further, the cepstral coefficients might be encoded using the pattern dictionary and a matrix of distances between reference vectors of the pattern dictionary. Here it is advantageously possible to analyze tone related properties of the useful signal (for music tracks, for example) and represent the analysis results in the footprint.

In other preferred embodiments of the inventive method, the analyzer comprises frequency filters for processing of a frequency spectrum of each of the data sets, where each of the frequency filters is adapted to filter a particular tone from the frequency spectrum of the data sets, resulting in a set of tones, and the analyzing instruction comprises calculating the amplitude of each of the tones of each of the data sets. Thus, rhythm and melody or further tone-related properties can easily be analyzed.

In further embodiments of the inventive method, the analyzing instructions further comprise instructions of calculating a frequency of occurrence of different tones, in particular for determining a melody of the useful signal, and/or a duration of one or more tones, in particular for determining a rhythm and/or a bpm-value representing the beats per minute for the useful signal.

In still further embodiments of the inventive method, the analyzer comprises a signal decimator for downsampling the useful signal, wherein the frequency band containing at least 90% of the energy of the useful signal is kept. This decreases the hardware requirements of the rest of the system.

In another embodiment of the invention, the analyzer comprises an active frame detector for processing the useful signal such that data sets with energy below a predetermined threshold are excluded from further processing, for which the threshold value is obtained by multiplying the average signal energy by a user-defined weighting factor. This procedure prevents false alarms caused by noise.

According to the invention, a method of identifying useful signals of a predetermined set of useful signals which are identical or similar to an input useful signal, wherein each of the useful signals is assigned a footprint generated according to a method of any one of the preceding claims, comprises an identifier unit, which

- receives as an input the footprint data vector of the input useful signal,
- calculates, for each pair of the input useful signal and of one of the set of useful signals, a distance according to a predetermined distance instruction between the respective footprint data vectors,
- returns, as a result of the identification, a list of useful signals whose distance is less than a predetermined threshold value.

This allows for a fast and reliable identification of identical or similar signals.

In a preferred embodiment of the aforementioned method, the step of calculating the distance comprises the following substeps:

- in a first substep, subvectors of the useful signals are used in distance calculation to calculate a raw distance, and the useful signals with raw distances below a first threshold value are provisionally identified,
- in a second substep, the distances of the provisionally identified useful signals to the input useful signal are calculated using the complete useful data vectors.

In case of a large number of signals in the set of useful signals, this allows fast identification of similar useful signals.

The aforementioned methods may be implemented on a computer program, which is adapted to run on a programmable computer, a programmable computer network or further programmable equipment. This allows cheap, easy and fast development of implementations of the inventive methods. In particular, such computer program might be stored on a computer-readable medium, as for example, CD-ROM or DVD-ROM.

Devices for use with the inventive methods may comprise in particular programmable computers, programmable computer networks or further programmable equipment, on which computer programs are installed, which implement the invention.

Further aspects and advantages of the invention will become apparent from the following description of embodiments of the invention with respect to the appended drawings, showing:

Fig. 1 a schematic representation of a first embodiment of the invention;

Fig. 2 a schematic representation of a second embodiment of the invention;

Fig. 3 a schematic representation of a footprint data vector according to the invention;

Fig. 4 a screen shot of an application implementing the invention.

The present invention proposes two independent analyzers.

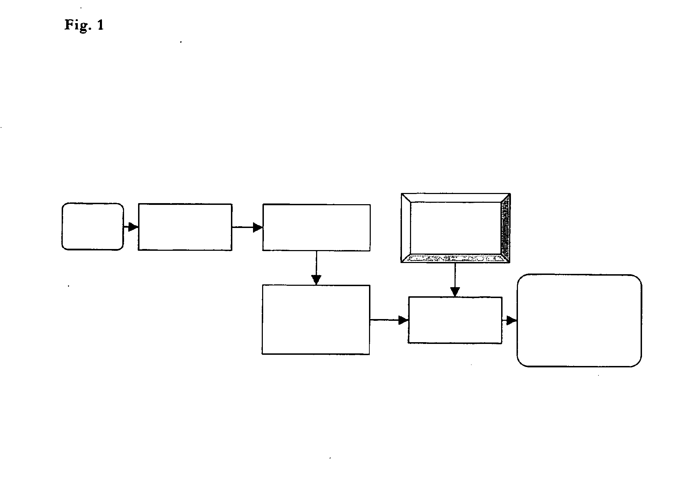

The first analyzer performs vector encoding using a pattern dictionary (Fig. 1). For each frame of the analyzed sequence an N-dimensional input vector consisting of N=12 cepstral coefficients is calculated using a linear prediction algorithm (LCP).

A representative set of musical tracks has been processed to build the pattern dictionary. For this set of useful signals a set of input vectors has been generated. A pattern dictionary has been constructed out of this set of vectors using the Centroid Computation for Codebook Design [L. Rabiner, B. Juang, Fundamentals of Speech Recognition, AT&T, 1993]. An acceptable size of the pattern dictionary (8192 reference vectors) has been determined experimentally.

The current input vector is then replaced by a reference vector, which is the closest to the input vector in a selected metric. Thus, each frame of the useful signal is encoded into one number of a reference vector. Therefore, the whole fragment is encoded as a sequence of $T_{an}/T_{frame}$ numbers of reference vectors from the pattern dictionary.

This algorithm provides efficient encoding of musical files with compression coefficient exceeding 17,500. In a computer-implemented system a user can set the abovementioned parameters according to the properties of the useful signal being processed. Footprints based on the D-codes (Dictionary-codes) are applicable to a wide range of useful signals (audio, video, medicine, etc.).

In preferred embodiments of the invention for use with audio signals, the useful signal is analyzed in separate fragments, each of $T_{an}$= 60 sec length. For each fragment, a separate footprint code is generated. The neighboring fragments are chosen to overlap by $1/2 T_{an}$.

Preferably, the signal is downsampled with frequency 8000 Hz, which essentially cuts its frequencies at 4000 Hz. The signal interval to be analyzed is split into sequential frames of $T_{fr}$=0.2 seconds each. In a computer-implemented system the user is able to tune these parameters according to the properties of the processed signal.

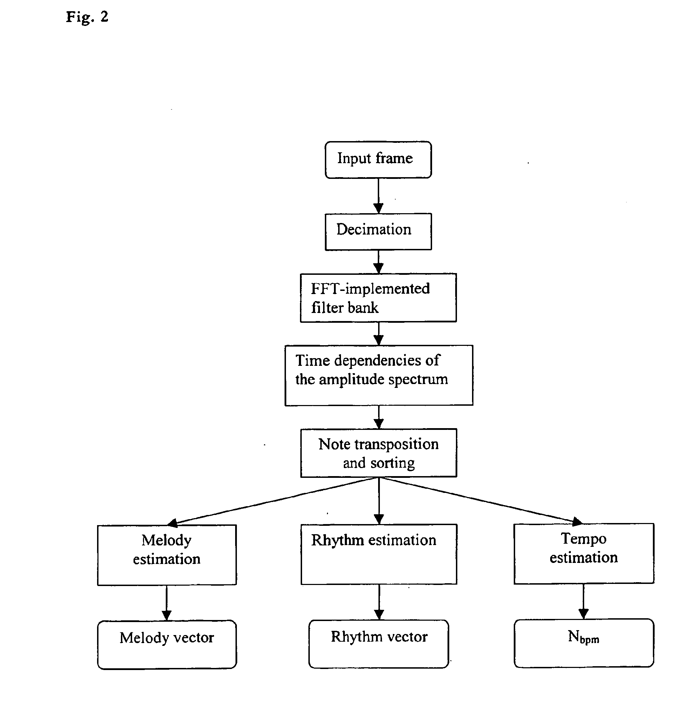

The second analyzer is based on an FFT implementation of a non-uniform filter bank (Fig. 2). A filter bank with center frequencies corresponding to tones is implemented using the FFT algorithm with dimension $N_{fft}$=65,536.

The central frequencies of the filters $F_k$ should correspond to the note (tone) frequencies:

$$\dot{F_k} = F_0 \left( \sqrt[12]{2} \right)^k, \, k = 1, \ldots, 95, \, F_0 = 32.073 \, \text{Hz}$$

The time dependencies of amplitudes at the output of the filters, calculated for every frame, are used for estimating the melody and rhythm for the useful signal frame being processed. In the preferred embodiment which is discussed here, the estimation algorithm is implemented in the following steps:

1) All notes (tones) are transposed into a single octave, where they obtain the numbers $i$=0,1,...11, while keeping the maximal amplitude $A[i]$ of the source note.

2) Note numbers $n[i]$ are sorted in the amplitude decreasing order:

$$A[n[0]] > A[n[1]] > \ldots > A[n[11]]$$

3) Three note sequences are formed from the *K* frames of the fragment:

$$\{n[0,k]\}, \{n[1,k]\}, \{n[2,k]\}, \text{ where } k=0,1,\ldots,K\text{-}1.$$

4) The frequency of occurrence of the first three notes *Pn[0,z]*, *Pn[1,z]*, *Pn[2,i]*, *i*=0,1,...,11 is calculated, and a 36-dimensional vector for the fragment being processed is calculated. This vector is essentially the melody estimation (the M-code).

5) The components of this 36-dimensional vector are recorded as the melody estimation for the fragment being processed.

6) A sequence of note duration values is calculated for the sequence *n[0,k]*.

7) A 12-dimensional vector, consisting of the frequencies of occurrence of duration values ranging from 0.2 to 4.0 seconds, is calculated.

8) A weighted average interval is calculated, and a 20-dimensional rhythm vector is calculated.

9) A number of beats per minute (bpm) is estimated for the fragment (this is essentially the tempo value), which is recorded together with the components of the 20-dimensional rhytm vector.

In an embodiment of the invention comprising both analyzers, the following steps are performed:

1) The useful signal is first processed by a signal decimator, which downsamples the useful signal, but keeps the frequency band containing at least 90% of the energy of the source useful signal. This decreases the hardware requirements of the rest of the system.
A filter with variable number of frequency-dependent sections and variable sample rate might be used for decimation of the useful signal; this allows the user to keep the most important properties of the useful signal for calculating the footprint data after decimation.

2) After decimation, the downsampled useful signal is processed by an active frame detector, which excludes the frames with energy below an established threshold from further processing, for which the threshold value is obtained by multiplying the average signal energy by a user-defined weighting factor. This procedure prevents false alarms caused by noise.
In the embodiment described here, all frames of the current fragment with energy below a certain threshold are excluded from further processing according to the following steps:

a) the threshold $Th_N$ is calculated according to the following formulae:

$$Th_S = \frac{1}{N}\sum_{i=0}^{N-1} P_i, \text{ where } P_i = \sqrt{\frac{1}{n_0}\sum_{k=0}^{n_0-1} x_{k+i\cdot Sh}^2}$$

$$Th_N = \gamma_N\left(Th_S + \frac{1}{N_V}\sum_{P_i>Th_S} P_i\right)$$

Here $N_v$ is the number of frames with $P_i>Th_S$, $n_0$ is the frame length, N is the number of frames in the fragment, Sh is the overlap length, $\gamma_N$ is a user-defined weight factor;

b) for each frame i its characteristic $S_i$ is calculated:

$$S_i = \begin{cases} 1, & P_i > Th_N \\ 0 & otherwise \end{cases}$$

The i-th frame is passed to the following stages of analysis if

$$S_{i-1} + S_i + S_{i+1} > 1.$$

Otherwise it is excluded from further processing.

3) The remaining frames are processed by a spectral analyzer, which calculates the smoothed spectrum parameters (cepstral coefficients) for each frame using linear prediction algorithm.

As described here, Pattern-Comparison Techniques and Spectral-Distortion Measures for Cepstral Distances. A pattern dictionary and a matrix of distances between reference vectors of the pattern dictionary are obtained beforehand, by processing a number of useful signals [L. Rabiner, B. Juang, Fundamentals of Speech Recognition, AT&T, 1993].

The number of reference vectors in the pattern dictionary depends on the class of useful signals. The preferred values are 1024-2048 for speech and 4096-8192 for music. If the inventive footprint technology is applied for signals with different properties, a separate pattern dictionary should be formed for each class of signals, together with a corresponding matrix of distances between the reference vectors.

The number of the reference vector from the pattern dictionary, corresponding to the current frame (i.e. the D-code of the frame), is obtained by the following steps:

    a) LPC analysis
    b) calculation of N cepstral coefficients
    c) vector encoding using the pattern dictionary

4) The N cepstral coefficients for the current frame are effectively encoded using a precalculated pattern dictionary and a matrix of distances between the reference vectors of the pattern dictionary. The obtained D-code of the current frame is a single number of a reference vector from the pattern dictionary. This algorithm provides a high degree of compression and high decoding efficiency. A D-code of the whole fragment is a sequence of numbers of the reference vectors from a pattern dictionary.

5) Analysis and encoding of distinctive features of the useful signal are performed using an FFT implementation of a non-uniform filter bank. FFT size and limiting frequencies of the filter bank are defined by the user according to the class of the useful signal. For audio signals we propose the value $N_{fft}$=65,536, and limiting frequencies are chosen so to include the tones ranging from 32 Hz to 3,950 Hz.

Analysis of the frequency of occurrence of different notes gives the corresponding melody code (M-code) for the current fragment of the useful signal. Analysis of the duration of each note gives the R-code and the beats per minute ($N_{bpm}$) value for the current fragment.

For estimation of distinctive properties of the useful signal, their encoding and adding to the footprint data, an FFT implementation of a non-uniform filter bank is used, wherein, for music, the non-uniform filter bank is chosen so that the central frequencies of the filters $F_k$ should correspond to the note frequencies:

$$F_k = F_0 \left( \sqrt[12]{2} \right)^k, k = 1,\ldots,95, F_0 = 32.073 \text{ Hz}$$

The M-code, R-code and $N_{bpm}$ for the current fragment are calculated in the following steps:

    a) FFT filter bank
    b) time dependencies of the spectral amplitudes

c) transposition of all notes to a single octave (notes obtain the numbers from 0 to 11) and sorting of the notes in the order of decreasing amplitude
d) melody estimation (M-code)
e) rhythm estimation (R-code)
f) tempo estimation ($N_{bpm}$)

A relatively large size of the FFT allows to tune the filter bank to the signal properties only by changing the FFT coefficient numbers, which determine the border frequencies of the filters.

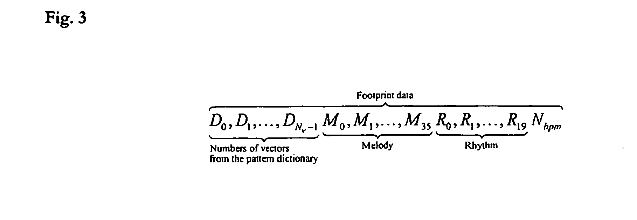

The structure of the footprint data resulting from a combination of the output data of the analyzer of Fig. 1 and that of Fig. 2 is shown on Fig. 3. The footprint data consists of a set of pattern numbers from a pattern dictionary, a 36-dimensional vector, a 20-dimensional vector, and a number. Of course, in other embodiments, only one analyzer might be used. The resulting footprints have correspondingly less elements.

The results of the analysis of many useful signals according to previous description may be stored in a database. Each useful signal might be assigned unique footprint data, which are recorded in the database. The footprints corresponding to the same signal are ordered according to the order of fragments in the signal. Thus, a signal can be identified not only as a whole, but also by any of its fragments.

The purpose of the database depends on the purpose of the whole system, in which the footprint technology is used. For musical signals the footprint data has the following structure:

$$\text{footprint data} = (\text{D-code}, \text{M-code}, \text{R-code}, N_{bpm})$$

The size of this data for a single fragment is approximately 2 K.

A preferred embodiment of the method of searching for a similar footprint code according to the invention comprises the following features:

A database of the footprint data for a large number of tracks is stored on a server. This database also contains the attributes of the musical track (name, author, genre, etc.). The server should also possess the means to communicate with a user, who might want to identify a musical track or a part of it by sending the footprint data, generated from it, to the server. In response, the user obtains a report containing titles and other properties of the musical tracks sorted in the order of their relevance.

The necessity of such a list results from the possible existence of many recordings of the same music under different conditions and with different performance, which should all be returned. The list is updated in real time while the user listens to his track. Since the number of tracks in the database can reach hundreds of thousands, it is important to implement a quick search method.

The embodiment discussed here thus comprises a two-step search system:

We shall designate the footprint code of the current fragment as $\{D_i, M_i, R_i, N_{bpm}\}$, and a footprint code from the database as $\{\tilde{D}_i, \tilde{M}_i, \tilde{R}_i, \tilde{N}_{bpm}\}$.

In the first step of the search algorithm, the footprint codes from the database are searched only by the $R_i$ values and the $N_{bpm}$ value, according to the following rule:

$$\sum_{i=0}^{19} \left| R_i - \tilde{R}_i \right| < \Delta_R(N_{cnd}), \left| N_{bpm} - \tilde{N}_{bpm} \right| < \Delta_{bpm}(N_{cnd})$$

Here $N_{cnd}$ is the desired value of temporary candidates, and $\Delta_{bpm}, \Delta_R$ are the tunable thresholds, which depend on $N_{cnd}$.

On the second step of the search algorithm, the temporary candidates are sorted in the order of decreasing weighted error:

$$\varepsilon = w_1 \varepsilon_D + w_2 \varepsilon_M + w_3 \varepsilon_R,$$

where

$$\varepsilon_M = \sum_{i=0}^{35} \left| M_i - \bar{M}_i \right|, \; \varepsilon_R = \sum_{i=0}^{19} \left| R_i - \tilde{R}_i \right|$$

The error value $\varepsilon_D$ is calculated using a dynamic programming algorithm called Dynamic Time Wrapping (DTW). The search speed is significantly increased by precalculation of a matrix of distances between the reference vectors of the pattern dictionary. Thus, the $\varepsilon_D$ values are obtained by summation of the matrix elements corresponding to the current values $D_i$ and $\tilde{D}_i$.

The user receives a list of database records together with likeness values calculated using formula:

$$L_n = (1 - \varepsilon) S_n,$$

where n is the number of the record in the list, and $S_n$ is a monotonously decreasing sequence.

The computer-implemented system allows to tune all abovementioned parameters according to the properties of the useful signal.

A method of searching for similar footprints in a database thus comprises the following steps:

1) The footprint data is generated for the current fragment of the useful signal.

2) K candidates are selected from the database of footprint codes, using quick search by one or several footprint codes from the whole footprint data.

3) The selected K candidates are sorted in order of decreasing values of the objective function, taking into account all footprint codes of the generated footprint data.

Selection of K candidates provides fast searching in a large database even with hundreds of thousands of footprints. The objective function provides the necessary compromise between true and false identification of useful signals.

Applied to musical signals, a current fragment might be identified by the following steps:

1) The fragment is processed, and its footprint data, containing D-code, M-code, R-code and $N_{bpm}$ is generated.

2) A quick selection of K candidate fragments from the database is performed, for which

$$\sum_{i=0}^{I_R-1} \left| R_i - \bar{R}_i \right| < \Delta_R(K)$$

$$\left| N_{bpm} - \tilde{N}_{bpm} \right| < \Delta_{bpm}(K)$$

where $I_R$ is the dimensionality of the corresponding R-code vector, $\tilde{R}, \tilde{N}_{bpm}$ are the footprint codes of the candidate fragment from the database, and the thresholds $\Delta_R, \Delta_{bpm}$ depend on the desirable number of candidates K.

3) Sorting of the selected K candidates in the order of decreasing error:

$$\varepsilon = w_1 \varepsilon_D + w_2 \varepsilon_M + w_3 \varepsilon_R$$

where

$$\varepsilon_M = \sum_{i=0}^{I_M-1} \left| M_i - \tilde{M}_i \right|, \; \varepsilon_R = \sum_{i=0}^{I_R-1} \left| R_i - \tilde{R}_i \right|$$

Here $I_M$ is the dimensionality of the M-code vector.

The error $\varepsilon_D$ is calculated using the Dynamic Time Wrapping (DTW) algorithm, taking into account the precalculated distances between the reference vectors of the pattern dictionary.

4) Likeness value (L) estimation for all K candidates from the database:

$$L = (1 - \varepsilon) S\%$$

where S is the function determining the likeness scale from 0% to 100%.

In preferred embodiments of the invention, the footprint generation and the footprint searching methods may be implemented in software, hardware or both. Each method or parts thereof may be described with the aid of appropriate programming languages in the form of computer-readable instructions, such as program or program modules. These computer programs may be installed on and executed by one or more computers or such like programmable devices. The programs may be stored on removable media (CD-ROMs, DVD-ROMs, etc.) or other storage devices, for storage and distribution purposes or may be distributed via the Internet.

Devices implementing the inventive footprint generation and searching method may be audio player tools for use on a PC. These players might be dedicated hardware with appropriate software, i.e. stand-alone-player, or may be activated on a desktop display of a PC, integrated in a web page or downloaded and installed as a plug-in to execute in known players.

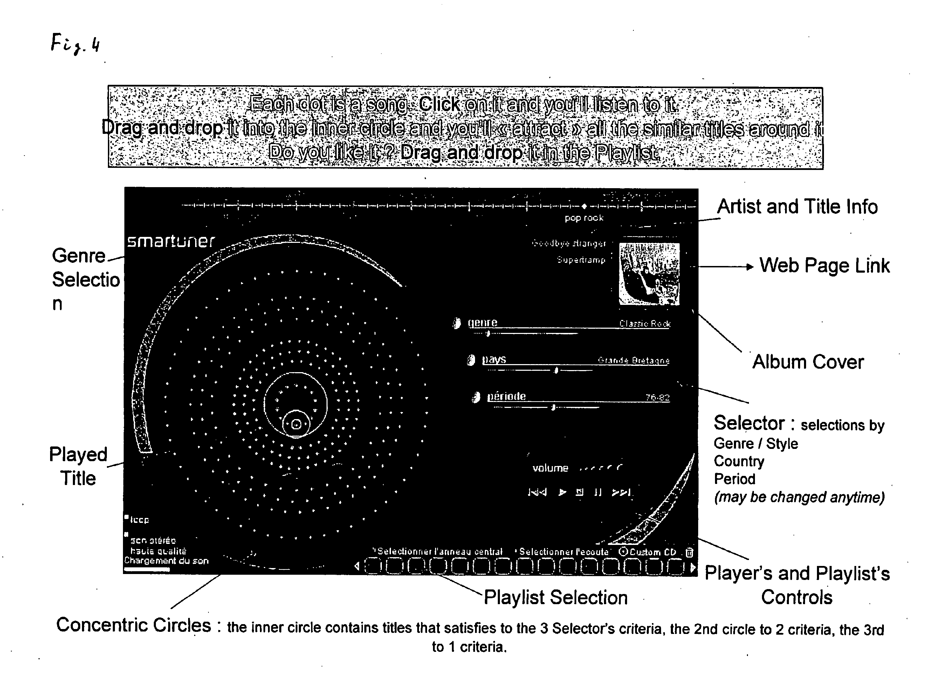

As an example, Fig. 4 illustrates a desktop view of an application having the inventive footprint generation and searching method implemented. Upon request of a user, performed by clicking on one of the light dots in the left part of the view, the player starts playing the requested track. Similar tracks (i.e., tracks within the database serving the application with similar footprints) are displayed nearby to each other. Thus it is easily possible for the user to choose tracks with comparable properties. Which properties are used for comparison, can be also chosen by the user.

Some appropriate embodiments of the invention have been described herein. Many further embodiments are possible, and are evident to the skilled person, without departing from the scope of the invention, which is exclusively defined by the appended claims.

**Claims**

1. Method of generating a footprint for an audio signal,

wherein the audio signal represents the evolution of a spectrum comprising audio frequencies over time,

whereby at least one data set comprising a part of the audio signal is processed by at least one analyzer according to a predetermined analyzing instruction,

whereby the analyzer outputs as a result of the processing a footprint data vector depending on and identifying the processed at least one data set,

whereby the at least one analyzer comprises frequency filters for processing a frequency spectrum of each of the data sets,

**characterized in that**

each of the frequency filters is adapted to filter a particular tone from the frequency spectrum of the data sets, resulting in a set of tones, and the analyzing instruction comprises selecting the tones with the highest amplitude for each of the data sets and calculating a vector representing the number of occurrences of different tones as selected tones.

**2.** The method of claim 1,
**characterized in that**
the analyzing instruction processes the data set with regard to properties of the data set which are perceptible for human sense during reception of the useful signal by humans.

**3.** The method of claim 1 or 2,
**characterized in that**
the data set is processed by two or more analyzers and/or two or more analyzing instructions and the footprint data vector represents results of the processing by the analyzers and/or analyzing instructions.

**4.** The method of any one of the preceding claims,
**characterized in that**
two or more overlapping or non-overlapping data sets of the useful signal are processed and the footprint data vector represents results of the processing of the data sets.

**5.** The method of any one of the preceding claims,
**characterized in that**
the data set comprises a useful signal frame of the useful signal,
the analyzing instruction comprises comparing the data set with each pattern frame of a predetermined pattern dictionary , where the pattern dictionary comprises a numbered list of pattern frames, and comprises estimating a similarity of the useful signal frame with each of the pattern frames, and
the analyzer outputs as the result of the processing of the data set the number of the pattern frame which is determined to have highest similarity with the useful signal frame.

**6.** The method of claim 5,
**characterized in that**
the useful signal frame is assigned a useful signal frame vector, each of the pattern frames is assigned a pattern frame vector, and the similarity of each pair of useful signal frame and pattern frame is determined by calculating the distance between the useful signal frame vector and the respective pattern frame vector.

**7.** The method of claim 5 or 6,
**characterized in that**
the analyzer is a spectral analyzer, which calculates smoothed spectrum parameters, in particular cepstral coefficients, for the frame using a linear prediction algorithm.

**8.** The method of claim 7,
**characterized in that**
the cepstral coefficients are encoded using the pattern dictionary and a matrix of distances between reference vectors of the pattern dictionary.

**9.** The method of claim 1,
**characterized in that**
the analyzing instructions further comprise instructions of calculating a duration of one or more tones, in particular for determining a rhythm and/or a bpm-value representing the beats per minute for the useful signal.

**10.** The method of any one of the preceding claims,
**characterized in that**
the analyzer comprises a signal decimator for downsampling the useful signal,
wherein the frequency band containing at least 90% of the energy of the useful signal is kept.

**11.** The method of any one of the preceding claims,
**characterized in that**
the analyzer comprises an active frame detector for processing the useful signal such that data sets with energy below a predetermined threshold are excluded from further processing.

**12.** Method of identifying an audio signals of a predetermined set of audio signals which are identical or similar to an input audio signal, wherein each of the audio signals is assigned a footprint generated according to a method of any one of the preceding claims, and

wherein an identifier unit

receives as an input the footprint data vector of the input audio signal, calculates, for each pair of the input audio signal and of one of the set of useful signals, a distance according to a predetermined distance instruction between the respective footprint data vectors,

returns, as a result of the identification, a list of audio signals whose distance is less than a predetermined threshold value.

13. The method of any one of the preceding claims,
**characterized in that**
the step of calculating the distance comprises the following substeps:

a. in a first substep, subvectors of the audio signals are used in distance calculation to calculate a raw distance, and the audio signals with raw distances below a first threshold value are provisionally identified,
b. in a second substep, the distances of the provisionally identified audio signals to the input useful signal are calculated using the complete audio data vectors.

14. Computer program implementing the method according to any one of claims 1 to 13 , adapted to run on a programmable computer, a programmable computer network or further programmable equipment.

15. Computer-readable medium having stored thereon a computer program according to claim 14.

16. Device for implementing a method for generating a footprint of a audio signal according to any one of claims 1 to 13, in particular a programmable computer, a programmable computer network or further programmable equipment, on which a computer program according to claim 14 is installed.

17. Arrangement, comprising a device according to claim 16,
**characterized by**
a database connected to the device for storing footprint data vectors, wherein the device is adapted to access the database.

**Patentansprüche**

1. Verfahren zum Erzeugen eines Fußabdrucks für ein Tonsignal,
wobei das Tonsignal die Entwicklung eines Spektrums mit Tonfrequenzen über die Zeit darstellt,
wobei mindestens ein Datensatz, der einen Teil des Tonsignals umfasst, durch mindestens einen Analysator in Übereinstimmung mit einer vorbestimmten Analysieranweisung verarbeitet wird,
wobei der Analysator als ein Ergebnis der Verarbeitung einen Fußabdruck-Datenvektor ausgibt, der von dem verarbeiteten mindestens einen Datensatz abhängt und diesen kennzeichnet,
wobei der mindestens eine Analysator Frequenzfilter zur Verarbeitung eines Frequenzspektrums eines jeden der Datensätze umfasst,
**dadurch gekennzeichnet, dass**
jedes der Frequenzfilter dafür eingerichtet ist, einen bestimmten Ton aus dem Frequenzspektrum der Datensätze zu filtern, was einen Satz von Tönen ergibt, und die Analysieranweisung umfasst, die Töne mit der höchsten Amplitude für jeden der Datensätze auszuwählen und einen Vektor zu berechnen, der die Anzahl des Auftretens von unterschiedlichen Tönen als ausgewählte Töne darstellt.

2. Verfahren nach Anspruch 1,
**dadurch gekennzeichnet, dass**
die Analysieranweisung den Datensatz im Hinblick auf Eigenschaften des Datensatzes verarbeitet, welche für das menschliche Empfinden während eines Empfangs des Nutzsignals durch Menschen wahrnehmbar sind.

3. Verfahren nach Anspruch 1 oder 2,
**dadurch gekennzeichnet, dass**
der Datensatz durch zwei oder mehr Analysatoren und/oder zwei oder mehr Analysieranweisungen verarbeitet wird und der Fußabdruck-Datenvektor Ergebnisse der Verarbeitung durch die Analysatoren und/oder Analysieranweisungen darstellt.

**4.** Verfahren nach einem der vorhergehenden Ansprüche,
**dadurch gekennzeichnet, dass**
zwei oder mehr überlappende oder nicht überlappende Datensätze des Nutzsignals verarbeitet werden und der Fußabdruck-Datenvektor Ergebnisse der Verarbeitung der Datensätze darstellt.

**5.** Verfahren nach einem der vorhergehenden Ansprüche,
**dadurch gekennzeichnet, dass**
der Datensatz einen Nutzsignal-Datenübertragungsblock des Nutzsignals umfasst,
die Analysieranweisung umfasst, den Datensatz mit jedem Muster-Datenübertragungsblock eines vorbestimmten Muster-Verzeichnisses zu vergleichen,
wobei das Muster-Verzeichnis eine nummerierte Liste von Muster-Datenübertragungsblöcken umfasst, und umfasst, eine Ähnlichkeit des Nutzsignal-Datenübertragungsblocks mit jedem der Muster-Datenübertragungsblöcke zu schätzen, und
der Analysator als das Ergebnis der Verarbeitung des Datensatzes die Nummer des Muster-Datenübertragungsblocks ausgibt, welcher als jener mit der größten Ähnlichkeit mit dem Nutzsignal-Datenübertragungsblock bestimmt wird.

**6.** Verfahren nach Anspruch 5,
**dadurch gekennzeichnet, dass**
dem Nutzsignal-Datenübertragungsblock ein Nutzsignal-Datenübertragungsblock-Vektor zugeordnet wird, jedem der Muster-Datenübertragungsblöcke ein Muster-Datenübertragungsblock-Vektor zugeordnet wird und die Ähnlichkeit jedes Paares Nutzsignal-Datenübertragungsblock und Muster-Datenübertragungsblock bestimmt wird, indem die Entfernung zwischen dem Nutzsignal-Datenübertragungsblock-Vektor und dem jeweiligen Muster-Datenübertragungsblock-Vektor berechnet wird.

**7.** Verfahren nach Anspruch 5 oder 6,
**dadurch gekennzeichnet, dass**
der Analysator ein Spektralanalysator ist, welcher Parameter eines geglätteten Spektrums in bestimmten Cepstrum-Koeffizienten für den Datenübertragungsblock unter Verwendung eines linearen Vorhersagealgorithmus berechnet.

**8.** Verfahren nach Anspruch 7,
**dadurch gekennzeichnet, dass**
die Cepstrum-Koeffizienten unter Verwendung des Muster-Verzeichnisses und einer Matrix von Entfernungen zwischen Referenzvektoren des Muster-Verzeichnisses codiert werden.

**9.** Verfahren nach Anspruch 1,
**dadurch gekennzeichnet, dass**
die Analysieranweisungen weiterhin Anweisungen umfassen, eine Dauer von zwei oder mehr Tönen zu berechnen, insbesondere zur Bestimmung eines Rhythmus und/oder eines bpm-Wertes, der die Taktschläge pro Minute für das Nutzsignal darstellt.

**10.** Verfahren nach einem der vorhergehenden Ansprüche,
**dadurch gekennzeichnet, dass**
der Analysator einen Signaldezimierer zum Heruntertakten des Nutzsignals umfasst,
wobei das Frequenzband, das mindestens 90% der Energie des Nutzsignals enthält, bewahrt wird.

**11.** Verfahren nach einem der vorhergehenden Ansprüche,
**dadurch gekennzeichnet, dass**
der Analysator einen Aktiv-Datenübertragungsblock-Detektor zur Verarbeitung des Nutzsignals derart umfasst, dass Datensätze mit einer Energie unter einem vorbestimmten Schwellenwert von weiterer Verarbeitung ausgeschlossen werden.

**12.** Verfahren zum Kennzeichnen eines Tonsignals eines vorbestimmten Satzes von Tonsignalen, welche einem Eingangs-Tonsignal gleich oder ähnlich sind, wobei jedem der Tonsignale ein in Übereinstimmung mit einem Verfahren nach einem der vorhergehenden Ansprüche erzeugter Fußabdruck zugeordnet wird, und
wobei eine Kennzeichnungseinheit
den Fußabdruck-Datenvektor des Eingangs-Tonsignals als eine Eingangsgröße empfängt,
für jedes Paar des Eingangs-Tonsignals und eines der Sätze von Nutzsignalen eine Entfernung in Übereinstimmung mit einer vorbestimmten Entfernungsanweisung zwischen den jeweiligen Fußabdruck-Datenvektoren berechnet, als Ergebnis der Kennzeichnung eine Liste von Tonsignalen zurücksendet, deren Entfernung kleiner als ein vorbestimmter Schwellenwert ist.

**13.** Verfahren nach einem der vorhergehenden Ansprüche,
**dadurch gekennzeichnet, dass**
der Schritt, die Entfernung zu berechnen, die folgenden Teilschritte umfasst:

a) in einem ersten Teilschritt werden Teilvektoren der Tonsignale bei der Entfernungsberechnung verwendet, um eine Rohentfernung zu berechnen, und die Tonsignale mit Rohentfernungen unter einem ersten Schwellenwert werden provisorisch gekennzeichnet,
b) in einem zweiten Teilschritt werden die Entfernungen der provisorisch gekennzeichneten Tonsignale zu dem Eingangs-Nutzsignal unter Verwendung der vollständigen Tondatenvektoren berechnet.

**14.** Computerprogramm zur Durchführung des Verfahrens gemäß einem der Ansprüche 1 bis 13, das dafür eingerichtet ist, auf einem programmierbaren Computer, einem programmierbaren Computernetz oder einem anderweitigen programmierbaren Gerät zu laufen.

**15.** Computerlesbares Speichermedium, auf dem ein Computerprogramm gemäß Anspruch 14 gespeichert ist.

**16.** Vorrichtung zur Durchführung eines Verfahrens zum Erzeugen eines Fußabdrucks eines Tonsignals gemäß einem der Ansprüche 1 bis 13, insbesondere ein programmierbarer Computer, ein programmierbares Computernetz oder ein anderweitiges programmierbares Gerät, auf welchem ein Computerprogramm gemäß Anspruch 14 installiert ist.

**17.** Anordnung, die eine Vorrichtung gemäß Anspruch 16 umfasst,
**gekennzeichnet durch**
eine mit der Vorrichtung verbundene Datenbank zum Speichern von Fußabdruck-Datenvektoren, wobei die Vorrichtung dafür eingerichtet ist, auf die Datenbank zuzugreifen.

## Revendications

**1.** Procédé destiné à générer une empreinte pour un signal audio,-
dans lequel le signal audio représente l'évolution d'un spectre comprenant des fréquences audio au fil du temps, moyennant quoi, au moins un ensemble de données comprenant une partie du signal audio est traité par au moins un analyseur selon une instruction d'analyse prédéterminée ;
moyennant quoi l'analyseur génère en sortie, suite au traitement, un vecteur de données d'empreinte dépendant dudit et identifiant ledit au moins un ensemble de données traité ;
moyennant quoi ledit au moins un analyseur comporte des filtres de fréquence pour traiter un spectre de fréquences de chacun des ensembles de données ;
**caractérisé en ce que**
chacun des filtres de fréquence est apte à filtrer une tonalité particulière en provenance du spectre de fréquences des ensembles de données, ce qui génère un ensemble de tonalités, et l'instruction d'analyse comporte l'étape consistant à sélectionner les tonalités ayant l'amplitude la plus élevée pour chacun des ensembles de données et l'étape consistant à calculer un vecteur représentant le nombre d'occurrences des tonalités différentes en tant que tonalités sélectionnées.

**2.** Procédé selon la revendication 1,
**caractérisé en ce que**
l'instruction d'analyse traite l'ensemble de données relativement à des propriétés de l'ensemble de données qui sont perceptibles pour les sens humains au cours de la réception du signal utile par les humains.

**3.** Procédé selon la revendication 1 ou 2,
**caractérisé en ce que**
l'ensemble de données est traité par deux analyseurs ou plus et/ou deux instructions d'analyse ou plus et le vecteur de données d'empreinte représente les résultats du traitement obtenus par les analyseurs et/ou les instructions d'analyse.

**4.** Procédé selon l'une quelconque des revendications précédentes,
**caractérisé en ce que**
deux ensembles de données ou plus, en chevauchement ou sans chevauchement, du signal utile, sont traités et le vecteur de données d'empreinte représente les résultats du traitement des ensembles de données.

**5.** Procédé selon l'une quelconque des revendications précédentes,
**caractérisé en ce que**
l'ensemble de données comporte une trame de signal utile du signal utile ;
l'instruction d'analyse comporte l'étape consistant à comparer l'ensemble de données à chaque trame de modèle d'un dictionnaire de modèles prédéterminé, où le dictionnaire de modèles comporte une liste numérotée de trames de modèle, et comporte l'étape consistant à estimer une similarité de la trame de signal utile avec chacune des trames de modèle ; et
l'analyseur génère en sortie, suite au traitement de l'ensemble de données, le numéro de la trame de modèle qui est déterminé comme ayant la similarité la plus élevée avec la trame de signal utile.

**6.** Procédé selon la revendication 5,
**caractérisé en ce que**
un vecteur de trame de signal utile est affecté à la trame de signal utile, chacune des trames de modèle se voit affecter un vecteur de trame de modèle, et la similarité de chaque paire de trame de signal utile et de trame de modèle est déterminée en calculant la distance entre le vecteur de trame de signal utile et le vecteur de trame de modèle respectif.

**7.** Procédé selon la revendication 5 ou 6,
**caractérisé en ce que**
l'analyseur est un analyseur spectral, lequel calcule des paramètres de spectre lissés, en particulier des coefficients cepstraux pour la trame, en utilisant un algorithme de prédiction linéaire.

**8.** Procédé selon la revendication 7,
**caractérisé en ce que**
les coefficients cepstraux sont codés en utilisant le dictionnaire de modèles et un tableau matriciel des distances entre des vecteurs de référence du dictionnaire de modèles.

**9.** Procédé selon la revendication 1,
**caractérisé en ce que**
les instructions d'analyse comprennent en outre des instructions pour calculer une durée d'une ou de plusieurs tonalités, en particulier pour déterminer un rythme et/ou une valeur « bpm » représentant les battements par minute du signal utile.

**10.** Procédé selon l'une quelconque des revendications précédentes,
**caractérisé en ce que**
l'analyseur comporte un décimateur de signaux pour échantillonner par abaissement le signal utile, dans lequel la bande de fréquence contenant au moins 90 % de l'énergie du signal utile est conservée.

**11.** Procédé selon l'une quelconque des revendications précédentes,
**caractérisé en ce que**
l'analyseur comporte un détecteur de trame active pour traiter le signal utile, de sorte que des ensembles de données, dont le niveau d'énergie est inférieur à un seuil prédéterminé, sont exclus du traitement ultérieur.

**12.** Procédé destiné à identifier des signaux audio d'un ensemble prédéterminé de signaux audio qui sont identiques ou similaires à un signal audio d'entrée, dans lequel chacun des signaux audio se voit affecter une empreinte générée selon un procédé selon l'une quelconque des revendications précédentes, et
dans lequel une unité d'identification
reçoit en tant qu'entrée le vecteur de données d'empreinte du signal audio d'entrée ;
calcule, pour chaque paire du signal audio d'entrée et d'un signal de l'ensemble des signaux utiles, une distance selon une instruction de distance prédéterminée entre les vecteurs de données d'empreinte respectifs ; et
renvoie, suite à l'identification, une liste de signaux audio dont la distance est inférieure à une valeur de seuil prédéterminée.

**13.** Procédé selon l'une quelconque des revendications précédentes,
**caractérisé en ce que**
l'étape de calcul de la distance comporte les sous-étapes ci-après dans lesquelles :

    a. au cours d'une première sous-étape, des sous-vecteurs des signaux audio sont utilisés dans le calcul de distances pour calculer un distance brute, et les signaux audio ayant des distances brutes inférieures à une première valeur de seuil sont provisoirement identifiés ;
    b. au cours d'une seconde sous-étape, les distances des signaux audio provisoirement identifiés au niveau du signal utile d'entrée sont calculées en utilisant les vecteurs de données audio complets.

**14.** Programme informatique mettant en oeuvre le procédé selon l'une quelconque selon les revendications 1 à 13, apte à être exécuté sur un ordinateur programmable, un réseau informatique programmable ou un autre équipement programmable.

**15.** Support lisible par un ordinateur sur lequel est stocké un programme informatique selon la revendication 14.

**16.** Dispositif pour mettre en oeuvre un procédé destiné à générer une empreinte d'un signal audio selon l'une quelconque des revendication 1 à 13, notamment un ordinateur programmable, un réseau informatique programmable ou un autre équipement programmable, sur lequel un programme informatique selon la revendication 14 est installé.

**17.** Agencement, comprenant un dispositif selon la revendication 16,
**caractérisé par**
une base de données connectée au dispositif pour stocker des vecteurs de données d'empreinte, dans lequel le dispositif est apte à accéder à la base de données.

Fig. 1

**Fig. 2**

```
                    ┌─────────────────┐
                    │   Input frame   │
                    └─────────────────┘
                             │
                             ▼
                    ┌─────────────────┐
                    │   Decimation    │
                    └─────────────────┘
                             │
                             ▼
                    ┌─────────────────┐
                    │ FFT-implemented │
                    │   filter bank   │
                    └─────────────────┘
                             │
                             ▼
                ┌─────────────────────────┐
                │   Time dependencies of  │
                │  the amplitude spectrum │
                └─────────────────────────┘
                             │
                             ▼
                   ┌───────────────────┐
                   │ Note transposition │
                   │    and sorting     │
                   └───────────────────┘
              ┌──────────────┼──────────────┐
              ▼              ▼              ▼
      ┌────────────┐  ┌────────────────┐  ┌────────────┐
      │   Melody   │  │     Rhythm     │  │   Tempo    │
      │ estimation │  │   estimation   │  │ estimation │
      └────────────┘  └────────────────┘  └────────────┘
              │              │              │
              ▼              ▼              ▼
      ┌────────────┐  ┌────────────────┐  ┌────────────┐
      │   Melody   │  │  Rhythm vector │  │   N_bpm    │
      │   vector   │  │                │  │            │
      └────────────┘  └────────────────┘  └────────────┘
```

Fig. 3

$$\overbrace{\underbrace{D_0, D_1, \ldots, D_{N_v-1}}_{\substack{\text{Numbers of vectors} \\ \text{from the pattern dictionary}}} \underbrace{M_0, M_1, \ldots, M_{35}}_{\text{Melody}} \underbrace{R_0, R_1, \ldots, R_{19}}_{\text{Rhythm}} N_{bpm}}^{\text{Footprint data}}$$

# Fig. 4

Each dot is a song. Click on it and you'll listen to it.
Drag and drop it into the inner circle and you'll « attract » all the similar titles around it
Do you like it ? Drag and drop it in the Playlist.

Artist and Title Info

Web Page Link

Album Cover

Genre Selection

Played Title

smartuner

pop rock

Goodbye stranger
Supertramp

genre — Classic Rock

pays — Grande Bretagne

période — 76-82

volume

Selector : selections by
Genre / Style
Country
Period
(may be changed anytime)

icep
son stéréo
haute qualité
Chargement du son

'Sélectionner l'anneau central   'Sélectionner l'écoute   ⊙ Custom CD

Playlist Selection

Player's and Playlist's Controls

Concentric Circles : the inner circle contains titles that satisfies to the 3 Selector's criteria, the 2nd circle to 2 criteria, the 3rd to 1 criteria.

EP 1 684 263 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Cano et al.** *proceedings of the IEEE,* 09 December 2002, 169-173

- **L. Rabiner ; B. Juang.** *Fundamentals of Speech Recognition,* 1993